# FASCICULE DE BREVET EUROPEEN

(11) **EP 1 146 318 B1**
(45) Date de publication et mention de la délivrance du brevet: **28.02.2007**
(21) Numéro de dépôt: 01400974.0
(22) Date de dépôt: 13.04.2001
(51) Int. Cl.: G01D 5/14, G01P 3/487

(54) **Connecteur à concentrateur de flux pour moteur électrique et motoréducteur correspondant**
Magnetfluss-konzentrierender Verbinder für elektrischen Motor und zugehöriger Getriebemotor
Concentrating flux connector for electric motor and corresponding reduction gear

(30) Priorité: 14.04.2000 FR 0004870
(43) Date de publication de la demande: 17.10.2001
(73) Titulaire: Meritor Light Vehicle Systems-France, 45600 Sully sur Loire (FR)
(72) Inventeur: Breynaert, François, 14000 Caen (FR); Quere, Jérôme, 14112 Bieville-Beuville (FR)
(74) Mandataire: Jacobson, Claude

(56) Documents cités:
- WO-A-98/27640
- WO-A-99/13341
- DE-A- 4 218 793

## Description

La présente invention concerne le domaine des moteurs électriques, en particulier des motoréducteurs pour accessoires de véhicules automobiles, qui sont utilisés par exemple dans des systèmes de lève-vitre, d'actionnement de siège ou de toit-ouvrant.

L'invention vise plus précisément un connecteur pour moteur électrique adapté pour être fixé de façon détachable sur ledit moteur, ledit moteur comportant un anneau magnétique qui est le siège d'un champ magnétique lié à des paramètres de fonctionnement du moteur.

Les moteurs ou motoréducteurs auxquels s'appliquent l'invention sont associés à un système de commande utilisant des paramètres de vitesse et/ou de position du moteur. Ces paramètres sont fournis au système de commande par un capteur à effet Hall associé à l'anneau magnétique, lequel est adapté pour délivrer au capteur un champ magnétique dépendant de la vitesse et/ou de la position de l'arbre moteur.

Généralement, les dispositifs électroniques de commande de tels moteurs ou motoréducteurs comportent une carte électronique solidaire du carter du moteur, ladite carte comprenant des connexions d'alimentation électrique du moteur et le capteur à effet Hall. Ce capteur est fixé sur une partie de carte formée d'une bande rigide pénétrant dans le carter du moteur jusque dans une zone voisine de l'anneau magnétique, de façon que le capteur soit placé au voisinage dudit anneau.

On comprend que la présence d'un tel module électronique de commande sur le carter du moteur soit incompatible avec un haut degré de standardisation des moteurs, puisqu'une telle configuration du moteur et de son carter ne convient pas à une application dans laquelle le capteur de vitesse et/ou de position est supprimé, et dans laquelle le dispositif électronique de commande du moteur est déporté à distance du moteur.

Un but principal de l'invention est de remédier à cet inconvénient, et de proposer un connecteur pour moteur électrique, qui permette de transporter une information de type magnétique vers un dispositif de traitement électronique, et susceptible d'associer à cette fonction les fonctions classiques d'alimentation électrique du moteur.

Dans ce but, un connecteur suivant l'invention comporte au moins un organe de conduction de flux magnétique formant concentrateur de flux interposé, lorsque le connecteur est fixé sur le moteur, entre l'anneau magnétique et un capteur à effet Hall adapté pour mesurer le flux magnétique conduit par l'organe de conduction de flux magnétique.

L'invention vise également un motoréducteur pour accessoires de véhicule automobile, tels qu'une vitre ou un siège, comprenant un arbre de rotor équipé d'un anneau magnétique, caractérisé en ce qu'il comporte un connecteur tel que décrit précédemment.

Des exemples de réalisation de l'invention vont maintenant être décrits en regard des dessins annexés, sur lesquels:
- la Figure 1 est une vue de face en coupe partielle d'un motoréducteur équipé d'un connecteur suivant une première forme de réalisation de l'invention ;
- la Figure 2 est une section schématique suivant la ligne 2-2 de la Figure 1 représentant l'organe de conduction de flux magnétique et l'anneau magnétique;
- la Figure 3 est une vue analogue à la Figure 1 suivant une deuxième forme de réalisation de l'invention ;
- la Figure 4 est une section analogue à la Figure 2, suivant la ligne 4-4, de la Figure 3.

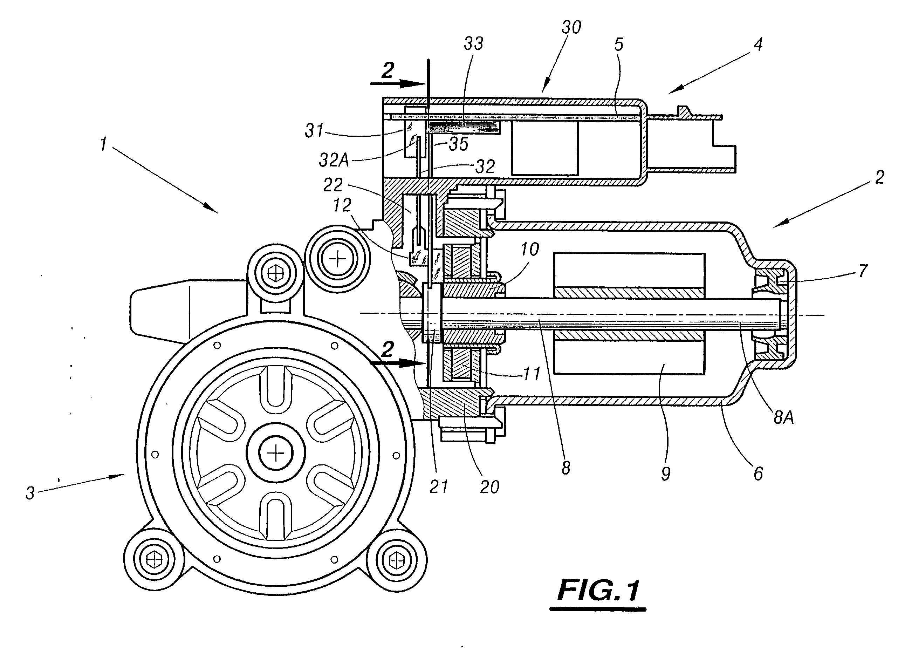

A la Figure 1, on a représenté un motoréducteur 1 essentiellement constitué d'un moteur 2 et d'un réducteur 3, le moteur 2 étant équipé d'un dispositif électronique de commande 4 qui comprend une carte de circuit imprimé 5.

Le moteur 2 comporte un stator 6 formant une enveloppe dans laquelle sont logés des aimants permanents (non représentés), et supportant par l'intermédiaire d'un palier 7 une extrémité 8A d'un arbre 8 d'un rotor 9. Ce dernier comporte de manière connue des enroulements bobinés autour de tôles empilées. Un collecteur 10 est relié électriquement au rotor 9 et reçoit par l'intermédiaire de balais 11 le courant d'alimentation du moteur transmis audit moteur au niveau de cosses d'alimentation 12.

Le motoréducteur 1 comprend d'autre part un carter 20 rigidement fixé au stator 6 et supportant par l'intermédiaire d'un deuxième ensemble de palier, non représenté, la deuxième extrémité de l'arbre de rotor 8. Le tronçon d'arbre de rotor situé du côté de cette deuxième extrémité d'arbre est configuré en tige filetée formant une vis sans fin, qui entraîne un ensemble de pignons du réducteur 3.

Un anneau magnétique 21 est fixé sur l'arbre de rotor 8 dans une région voisine des cosses d'alimentation 12.

Le carter 20 présente une ouverture 22 à proximité des cosses d'alimentation 12, adaptée pour recevoir de façon détachable un connecteur électrique 30 dans lequel est fixée la carte de circuit imprimé 5 du dispositif électronique de commande 4. Cette carte supporte un circuit électronique apte à délivrer un courant d'alimentation du moteur. Le connecteur 30 est maintenu en position par des moyens d'accrochage libérables de type classique, non représentés. Le courant délivré par le circuit électronique transite par des languettes de puissance 31 solidaires de la carte de circuit imprimé 5, chacune desdites languettes 31 étant connectée de façon fixe à une extrémité 32A d'un contact 32 de type « lyre », c'est-à-dire un contact dont une extrémité est constituée par une pince élastique à deux portions de contact symétriques galbées vers l'intérieur.

La carte de circuit imprimé 5 supporte par ailleurs un capteur à effet Hall 33 destiné à recevoir un flux magnétique significatif de la vitesse et/ou de la position de l'arbre de rotor 8 et à transmettre au dispositif électronique de commande 4 un signal électrique significatif de ces paramètres de fonctionnement du moteur.

Le connecteur 30 comprend également un organe 35 de conduction de flux magnétique constitué, dans la variante de l'invention représentée à la Figure 1, de deux broches métalliques parallèles, dont une extrémité est fixée à la carte de circuit imprimé 5 au voisinage du capteur à effet Hall 33. L'autre extrémité 35A constituant l'extrémité libre de la broche 35 se situe, lorsque le connecteur 30 est inséré dans l'ouverture 22 du carter 20 correspondante et maintenu par les moyens d'accrochage, à proximité de la périphérie de l'anneau magnétique 21. Les deux extrémités libres 35A sont de préférence disposées symétriquement par rapport à un plan axial P de l'anneau magnétique 21.

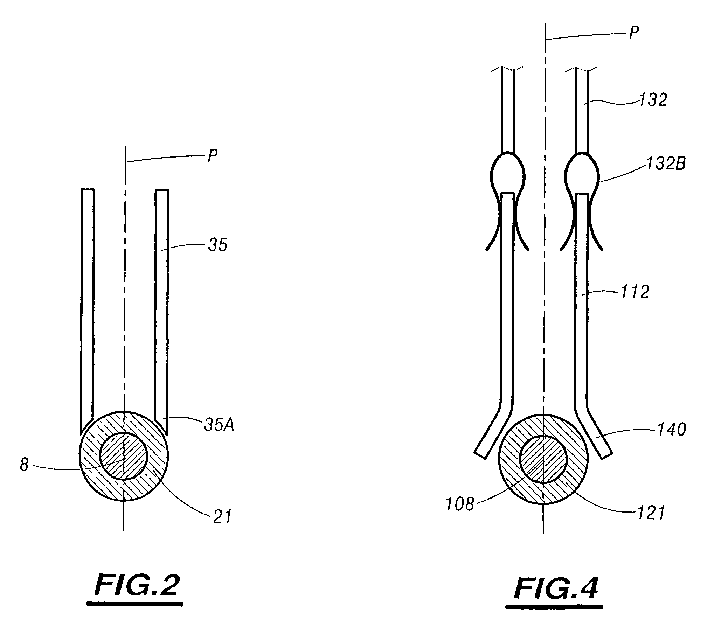

La position relative des broches métalliques 35 et de l'anneau magnétique 21 apparaît plus clairement sur la Figure 2. L'anneau magnétique 21 génère un champ magnétique d'intensité constante dont la direction varie avec la position angulaire de l'arbre de rotor 8, ce qui implique que le flux magnétique conduit par les broches 35 de l'anneau magnétique 21 vers le capteur à effet Hall 33 est fonction de la position angulaire de l'arbre de rotor 8. Le signal électrique délivré par le capteur à effet Hall 33 permet donc d'accéder à la vitesse et/ou à la position angulaire de l'arbre de rotor 8.

De préférence, les broches 35 formant organes de conduction de flux magnétique, sont réalisées en acier.

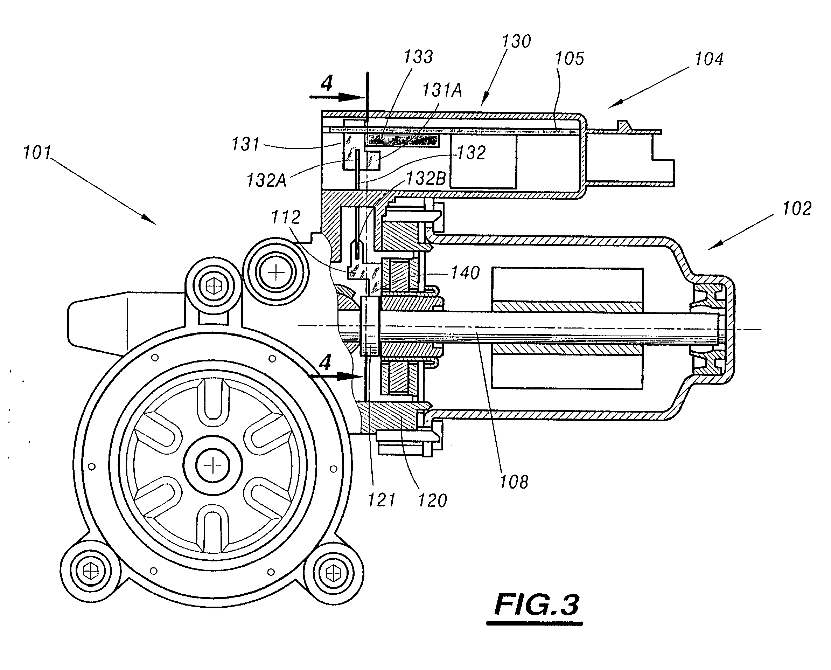

A la Figure 3, on a représenté un motoréducteur 101 de même type que précédemment, dont le moteur 102 comprend un arbre de rotor 108 sur lequel est monté fixe un anneau magnétique 121. Un connecteur 130 comporte une carte de circuit imprimé 105 faisant partie d'un dispositif électronique de commande 104 du moteur électrique 102 et supportant une paire de languettes d'alimentation 131 situées à proximité d'un capteur à effet Hall 133. Le connecteur est fixé de façon détachable au carter 120 du motoréducteur 101 par des moyens d'accrochage libérables classiques non représentés. Le connecteur 130 comporte des contacts 132 de type « lyre », fixés par une de leurs extrémités 132A aux languettes 131 et destinés à être connectés par leur seconde extrémité 132B à des cosses 112 d'alimentation du moteur.

Dans cette variante de l'invention, et comme il sera mieux vu à la Figure 4, les deux cosses 112 présentent chacune une partie 140 de recouvrement de l'anneau magnétique 121, oblique par rapport à la direction d'accouplement des contacts 132, et qui s'étend au voisinage de l'anneau magnétique 121 de façon quasiment tangentielle. Ces deux parties 140 sont de préférence symétriques par rapport au plan axial P de l'anneau 121. De même, les languettes 131 comportent une partie 131A recouvrant partiellement le capteur à effet Hall 133, de telle sorte que les cosses 112, les contacts 132 et les languettes 131 remplissent la fonction de concentrateur de flux et constituent un organe de conduction du flux magnétique de l'anneau magnétique 121 vers le capteur à effet Hall 133.

De préférence, les contacts 132 sont réalisés en acier, un matériau de ce type offrant un compromis acceptable entre les qualités de conduction électrique et magnétique, et disposant d'excellentes propriétés mécaniques.

On comprend aisément que les deux variantes de l'invention qui viennent d'être décrites permettent de concevoir des motoréducteurs à haut degré de standardisation. En effet, il n'est pas nécessaire de solidariser une carte de circuit imprimé portant un capteur à effet Hall au moteur pour réaliser les fonctions de capteur de position et/ou de vitesse, et donc de modifier le carter d'un moteur standard. Ainsi, un même moteur peut être utilisé quelle que soit l'application du motoréducteur, et quel que soit le type de capteur requis (vitesse/position), seul le connecteur devant être modifié.

L'invention, qui permet de conduire une information magnétique vers un capteur déporté, rend une configuration de motoréducteur unique adaptable à diverses applications, la standardisation du motoréducteur étant compensée par la diversification de la connectique, ce qui procure une économie considérable sur le système complet.

## Revendications

1. Connecteur pour moteur électrique, adapté pour être fixé de façon détachable sur ledit moteur, ledit moteur comportant un anneau magnétique (21 ; 121) qui est le siège d'un champ magnétique lié à des paramètres de fonctionnement du moteur, le connecteur comporte un organe (35 ; 112, 131, 132) de conduction de flux magnétique formant concentrateur de flux interposé, lorsque le connecteur (30 ;130) est fixé sur le moteur (2 ; 102), entre l'anneau magnétique (21 ; 121) et un capteur à effet Hall (33 ; 133) adapté pour mesurer le flux magnétique conduit par l'organe (35 ; 112, 131, 132) de conduction de flux magnétique.

2. Connecteur pour moteur électrique suivant la revendication 1, **caractérisé en ce que** l'organe (35 ;112, 131, 132) de conduction de flux magnétique comporte au moins une broche métallique (35 ; 132) adaptée pour qu'une partie (35A ; 132B) de ladite broche, lorsque le connecteur (30 ; 130) est fixé sur le moteur (2 ; 102), s'étende au voisinage de l'anneau magnétique (21 ; 121).

3. Connecteur pour moteur électrique suivant la revendication 2, **caractérisé en ce que** l'organe de conduction de flux magnétique comporte deux broches métalliques (35) dont les extrémités libres (35A) sont disposées symétriquement par rapport à un plan axial (P) de l'anneau magnétique (21).

4. Connecteur pour moteur électrique suivant l'une quelconque des revendications 1 à 3, **caractérisé en ce que** le connecteur (30 ;130) comporte en outre au moins deux contacts électriques de puissance (32 ;132) reliés à une source d'alimentation du moteur (2 ; 102).

5. Connecteur pour moteur électrique suivant la revendication 4, **caractérisé en ce qu'**au moins l'un desdits contacts électriques de puissance (132) est disposé pour constituer une partie de l'organe (112, 131, 132) de conduction de flux magnétique.

6. Connecteur pour moteur électrique suivant la revendication 5, **caractérisé en ce** ledit contact de puissance (132) constituant une partie de l'organe (112, 131, 132) de conduction de flux magnétique, est connecté, lorsque le connecteur (130) est fixé sur le moteur (102), à une plaquette métallique (112) solidaire du moteur (102) et dont une partie (140) s'étend au voisinage de l'anneau magnétique (121).

7. Connecteur suivant la revendication 5 ou 6, **caractérisé en ce que** ledit contact de puissance (132) constituant une partie de l'organe (112, 131, 132) de conduction de flux magnétique est réalisé en acier.

8. Connecteur pour moteur électrique suivant l'une quelconque des revendications 1 à 7, **caractérisé en ce que** le connecteur (30 ;130) est solidaire d'un circuit imprimé (5 ; 105) sur lequel est disposé le capteur à effet Hall (33 ;133).

9. Motoréducteur pour accessoires de véhicules automobiles, tels qu'une vitre, un siège ou un toit-ouvrant, comprenant un arbre de rotor (8 ;108) équipé d'un anneau magnétique (21; 121), **caractérisé en ce qu'**il comporte un connecteur (30 ;130) selon l'une quelconque des revendications 1 à 8.

## Claims

1. Electric motor connector fitted to be detachably fastened to said motor, said motor having a magnetic ring (21 ; 121), which is the centre for a magnetic field linked to operating parameters of the motor, wherein the connector has a magnetic flux conduction element (35; 112, 131, 132) forming a flux concentration means, which when the connector (30; 130) is fastened to the motor (2; 102) is interposed between the magnetic ring (21; 121) and a Hall sensor (33; 133) fitted to measure the magnetic flux conducted by the magnetic flux conduction element (35; 112, 131, 132).

2. Electric motor connector according to Claim 1, **characterised in that** the magnetic flux conduction element (35; 112, 131, 132) has at least one metal spindle (35; 132) fitted so that when the connector (30; 130) is fastened to the motor (2; 102) a section (35A; 132B) of said spindle extends into the vicinity of the magnetic ring (21; 121).

3. Electric motor connector according to Claim 2, **characterised in that** the magnetic flux conduction element has two metal spindles (35), the free ends (35A) of which are arranged symmetrically in relation to an axial plane (P) of the magnetic ring (21).

4. Electric motor connector according to any one of Claims 1 to 3, **characterised in that** the connector (30; 130) additionally has at least two electric power contacts (32; 132) connected to a power supply source of the motor (2; 102).

5. Electric motor connector according to Claim 4, **characterised in that** at least one of said electric power contacts (132) is arranged to form part of the magnetic flux conduction element (121, 131, 132).

6. Electric motor connector according to Claim 5, **characterised in that** when the connector (130) is fastened to the motor (102), said power contact (132) forming part of the magnetic flux conduction element (121, 131, 132) is connected to a metal plate (140) integral to the motor (102), a part (140) of this extending into the vicinity of the magnetic ring (121).

7. Connector according to Claim 5 or 6, **characterised in that** said power contact (132) forming part of the magnetic flux conduction element (121, 131, 132) is made of steel.

8. Electric motor connector according to any one of Claims 1 to 7, **characterised in that** the connector (30; 130) is integral to a printed circuit (5; 105), on which the Hall sensor (33; 133) is arranged.

9. Geared motor for motor vehicle accessories such as a window, a seat or a sun roof, comprising a rotor shaft (8; 108) fitted with a magnetic ring (21; 121), **characterised in that** it has a connector (30; 130) according to any one of Claims 1 to 8.

## Patentansprüche

1. Verbinder für einen Elektromotor, der dazu ausgelegt ist, auf abnehmbare Weise an dem Motor angebracht zu werden, wobei der Motor einen Magnetring (21; 121) aufweist, welcher der Sitz eines Magnetfeldes ist, das mit Betriebsparametern des Motors in Zusammenhang steht, wobei der Verbinder ein Magnetfluß-Leitungsorgan (35; 112, 131, 132) aufweist, das eine Flußkonzentrationseinrichtung bildet und das, wenn der Verbinder (30; 130) an dem Motor (2; 102) befestigt ist, zwischen dem Magnetring (21; 121) und einem Halleffekt-Sensor (33; 133) angeordnet ist, der dazu ausgelegt ist, den von dem Magnetfluß-Leitungsorgan (35; 112, 131, 132) hindurchgelassenen magnetischen Fluß zu messen.

2. Verbinder für einen Elektromotor nach Anspruch 1,
**dadurch gekennzeichnet,**
**daß** das Magnetfluß-Leitungsorgan (35; 112, 131, 132) mindestens einen metallischen Stift (35; 132) aufweist, der so ausgelegt ist, daß sich ein Teil (35A; 132B) des Stiftes in der Nähe des Magnetrings (21; 121) erstreckt, wenn der Verbinder (30; 130) an dem Motor (2; 102) befestigt ist.

3. Verbinder für einen Elektromotor nach Anspruch 2,
**dadurch gekennzeichnet,**
**daß** das Magnetfluß-Leitungsorgan zwei metallische Stifte (35) aufweist, deren freie Enden (35A) in Bezug auf eine axiale Ebene (P) des Magnetrings (21) symmetrisch angeordnet sind.

4. Verbinder für einen Elektromotor nach einem der Ansprüche 1 bis 3,
**dadurch gekennzeichnet,**
**daß** der Verbinder (30; 130) ferner mindestens zwei elektrische Anschlußkontakte (32; 132) aufweist, die an eine Versorgungsquelle des Motors (2; 102) angeschlossen sind.

5. Verbinder für einen Elektromotor nach Anspruch 4,
**dadurch gekennzeichnet,**
**daß** mindestens einer der elektrischen Anschlußkontakte (132) so angeordnet ist, daß er einen Teil des Magnetfluß-Leitungsorgans (112, 131, 132) bildet.

6. Verbinder für einen Elektromotor nach Anspruch 5,
**dadurch gekennzeichnet,**
**daß** der Anschlußkontakt (132), welcher einen Teil des Magnetfluß-Leitungsorgans (112, 131, 132) bildet, in dem am Motor (102) befestigten Zustand des Verbinders (130) mit einem Metallplättchen (112) verbunden ist, das fest mit dem Motor (102) verbunden ist und von dem sich ein Teil (140) in der Nähe des Magnetrings (121) erstreckt.

7. Verbinder nach Anspruch 5 oder 6,
**dadurch gekennzeichnet,**
**daß** der Anschlußkontakt (132), welcher einen Teil des Magnetfluß-Leitungsorgans (112, 131, 132) bildet, aus Stahl hergestellt ist.

8. Verbinder für einen Elektromotor nach einem der Ansprüche 1 bis 7,
**dadurch gekennzeichnet,**
**daß** der Verbinder (30; 130) mit einer gedruckten Schaltung (5; 105), auf welcher der Halleffekt-Sensor (33; 133) angeordnet ist, fest verbunden ist.

9. Getriebemotor für Kraftfahrzeug-Zubehörteile, wie etwa ein Fenster, einen Sitz oder ein Schiebedach, welcher eine mit einem Magnetring (21; 121) versehene Rotorwelle (8; 108) aufweist,
**dadurch gekennzeichnet,**
**daß** er einen Verbinder (30; 130) nach einem der Ansprüche 1 bis 8 aufweist.
